# EUROPEAN PATENT SPECIFICATION

(11) **EP 4 055 920 B1**
(45) Date of publication and mention of the grant of the patent: **21.05.2025**
(21) Application number: 20888012.0
(22) Date of filing: 16.11.2020
(51) Int. Cl.: H04W 60/00, H04W 88/18, H04W 48/18, H04W 8/20, H04W 8/02, H04W 60/06

(54) **METHOD AND APPARATUS FOR IMPROVING NETWORK SLICE CONTROL ACCURACY IN WIRELESS COMMUNICATION SYSTEM**
VERFAHREN UND VORRICHTUNG ZUR VERBESSERUNG DER NETZWERKSLICESTEUERUNGSPRÄZISION IN EINEM DRAHTLOSEN KOMMUNIKATIONSSYSTEM
PROCÉDÉ ET APPAREIL POUR AMÉLIORER UNE PRÉCISION DE CONTRÔLE DE TRANCHE DE RÉSEAU DANS UN SYSTÈME DE COMMUNICATION SANS FIL

(30) Priority: 15.11.2019 KR 20190146954
(43) Date of publication of application: 14.09.2022
(73) Proprietor: Samsung Electronics Co., Ltd., Suwon-si, Gyeonggi-do 16677 (KR)
(72) Inventor: JEONG, Sangsoo, Suwon-si, Gyeonggi-do 16677 (KR); LEE, Hoyeon, Suwon-si, Gyeonggi-do 16677 (KR)
(74) Representative: Gulde & Partner
(86) International application number: PCT/KR2020/016100
(87) International publication number: WO 2021/096325

(56) References cited:
- WO-A1-2018/232241
- CN-A- 110 062 407
- US-A1- 2018 368 061
- US-A1- 2019 230 556
- US-A1- 2019 261 185
- US-A1- 2019 335 392
- NOKIA ET AL: "Solution on KI#1: AMF/NSSF based counting of UEs in a Network Slice", vol. SA WG2, no. Reno, Nevada, USA; 20191118 - 20191122, 8 November 2019 (2019-11-08), XP051821333, Retrieved from the Internet <URL:https://ftp.3gpp.org/tsg_sa/WG2_Arch/TSGS2_136_Reno/Docs/S2-1911237.zip S2-1911237 AMFNSSF based counting of UEs in a Network Slice final.docx> [retrieved on 20191108]
- NOKIA NOKIA SHANGHAI BELL: "KI on Limitation of number of UEs per Network Slice", vol. SA WG2, no. Split, Croatia; 20191014 - 20191018, 4 October 2019 (2019-10-04), XP051801496, Retrieved from the Internet <URL:https://ftp.3gpp.org/Meetings_3GPP_SYNC/SA2/Docs/S2-1909291.zip S2-1909291 number of Ue per slice.docx> [retrieved on 20191004]
- NEC: "Solution KI#1: Max number of UEs per Network Slice control at registration", vol. SA WG2, no. Reno, USA; 20191118 - 20191122, 8 November 2019 (2019-11-08), XP051821440, Retrieved from the Internet <URL:https://ftp.3gpp.org/tsg_sa/WG2_Arch/TSGS2_136_Reno/Docs/S2-1911348.zip S2-1911348 Solution KI#1 Max number of UEs per Network Slice control at registration ver02.doc> [retrieved on 20191108]

## Description

### [Technical Field]

The disclosure relates generally to a method and apparatus for improving network slice control accuracy in a wireless communication system.

### [Background Art]

To meet increasing demand with respect to wireless data traffic after the commercialization of 4^{th} generation (4G) communication systems, efforts have been made to develop 5^{th} generation (5G) or pre-5G communication systems. For this reason, 5G or pre-5G communication systems are called "beyond 4G network" communication systems or "post Long Term Evolution (post-LTE)" systems.

To achieve high data rates, implementation of 5G communication systems in an ultra-high frequency or millimeter-wave (mmWave) band (e.g., a 60 gigahertz (GHz) band) is being considered. To reduce path loss of radio waves and to increase a transmission distance of radio waves in the ultra-high-frequency band for 5G communication systems, various technologies such as beamforming, massive multiple-input and multiple-output (massive MIMO), full-dimension MIMO (FD-MIMO), array antennas, analog beamforming, and large-scale antennas are being studied.

To improve system networks for 5G communication systems, various technologies such as evolved small cells, advanced small cells, cloud radio access networks (cloud RAN), ultra-dense networks, device-to-device (D2D) communication, wireless backhaul, moving networks, cooperative communication, coordinated multi-points (CoMP), and interference cancellation have been developed.

In addition, for 5G communication systems, advanced coding modulation (ACM) technologies such as hybrid frequency-shift keying (FSK) and quadrature amplitude modulation (QAM) (FQAM) and sliding window superposition coding (SWSC), and advanced access technologies such as filter bank multi-carrier (FBMC), non-orthogonal multiple access (NOMA), and sparse code multiple access (SCMA), have been developed.

Due to the development of various information technology (IT) technologies, virtualization technologies have been applied to network equipment, and communication equipments have evolved into virtualized network functions (NFs). Also, virtualized NFs may be installed/operated in various types of cloud or data centers (DCs) because they are implemented in software form without physical limitations. Particularly, the NFs may each be freely scaled (e.g., expanded or reduced), initiated, or terminated or expired according to service requirements, system capacities, and network loads. It should be noted that the NFs do not preclude physical configurations because they should be driven on basic physical configurations that are in the form of software. Also, the NFs may be implemented in simple physical configurations, that is, in hardware alone.

In order to support various services in such various network architectures, a network slicing technology has been introduced. Network slicing is a technology that logically configures a network into a set of NFs to support a particular service and separates one slice from another slice. One terminal may access two or more slices when receiving various services. NOKIA ET AL: "Solution on Kl#1: AMF/NSSF based counting of UEs in a Network Slice", 3GPP DRAFT; S2-1911237, vol. SA WG2, no. Reno, Nevada, USA; 20191118 - 20191122 8 November 2019 (2019-11-08), discusses AMF/NSSF based counting of UEs in a Network Slice. NOKIA NOKIA SHANGHAI BELL: "KI on Limitation of number of UEs per Network Slice", 3GPP DRAFT; S2-1909291, vol. SA WG2, no. Split, Croatia; 20191014 - 20191018 4 October 2019 (2019-10-04), discusses KI on Limitation of number of UEs per Network Slice. CN 110 062 407 A discloses network slice performance management method and device.

### [Summary of Invention]

The invention is set out in the appended set of claims.

### [Disclosure]

### [Description of Drawings]

The above and other aspects, features, and advantages of certain embodiments of the disclosure will be more apparent from the following description taken in conjunction with the accompanying drawings, in which:
FIG. 1 is a diagram illustrating a wireless communication system, according to an embodiment which does not correspond to the claimed invention;
FIG. 2 is a diagram illustrating a configuration of a wireless communication system, according to an embodiment which does not correspond to the claimed invention;
FIG. 3 is a flowchart illustrating a method of performing network slice control, according to an embodiment;
FIG. 4 is a flowchart illustrating a method of performing network slice control, according to an embodiment which does not correspond to the claimed invention;
FIG. 5 is a flowchart illustrating a method of performing network slice control, according to an embodiment which does not correspond to the claimed invention;
FIG. 6 is a flowchart illustrating a terminal deregistration procedure, according to an embodiment which does not correspond to the claimed invention;
FIG. 7 is a flowchart illustrating a terminal deregistration procedure, according to an embodiment which does not correspond to the claimed invention;
FIG. 8 is a diagram illustrating a configuration of a terminal, according to an embodiment which does not correspond to the claimed invention; and
FIG. 9 is a diagram illustrating a configuration of a network entity, according to an embodiment.

### [Best Model

The present disclosure has been made to address the above-mentioned problems and disadvantages, and to provide at least the advantages described below.

### [Mode for Invention]

Hereinafter, embodiments of the disclosure will be described in detail with reference to the accompanying drawings. In describing the embodiments, descriptions of technical contents that are well known in the technical field to which the disclosure belongs and are not directly related to the disclosure will be omitted. This is to more clearly convey the subject matter of the disclosure without obscuration thereof by omitting unnecessary descriptions thereof.

For the same reason, some components in the accompanying drawings may be exaggerated, omitted, or schematically illustrated. Also, the size of each component may not completely reflect the actual size thereof. In the drawings, the same or corresponding elements may be given the same reference numerals.

Throughout the disclosure, the expression "at least one of a, b or c" indicates only a, only b, only c, both a and b, both a and c, both b and c, all of a, b, and c, or variations thereof.

Examples of a terminal may include a UE, a mobile station (MS), a cellular phone, a smartphone, a computer, or a multimedia system capable of performing a communication function.

In the disclosure, a controller may also be referred to as a processor.

Throughout the specification, a layer (or a layer apparatus) may also be referred to as an entity.

The advantages and features of the disclosure and the accomplishing methods thereof will become apparent from the embodiments of the disclosure described below in detail with reference to the accompanying drawings. The disclosure may, however, be embodied in many different forms and should not be construed as being limited to the embodiments described below. Rather, these embodiments are provided to complete the disclosure and fully convey the scope of the disclosure to those of ordinary skill in the art and the disclosure will be defined only by the scope of the claims. Throughout the specification, like reference numerals may denote like elements.

It will be understood that each block of process flowchart diagrams and combinations of flowchart diagrams may be performed by computer program instructions. Because these computer program instructions may be mounted on a processor of a general-purpose computer, a special-purpose computer, or other programmable data processing equipment, the instructions executed through a processor of a computer or other programmable data processing equipment may generate a means of performing the functions described in the flowchart block(s). Because these computer program instructions may be stored in a computer-executable or computer-readable memory that may be oriented to a computer or other programmable data processing equipment to implement a function in a particular manner, the instructions stored in the computer-executable or computer-readable memory may also produce a production item containing an instruction means of performing the functions described in the flowchart block(s). Because the computer program instructions may also be mounted on a computer or other programmable data processing equipment, the instructions may perform a series of operations on the computer or other programmable data processing equipment to generate a computer-implemented process. The computer or other programmable data processing equipment may also provide operations for executing the functions described in the flowchart block(s).

Also, each block may represent a portion of a module, segment, or code including one or more executable instructions for executing one or more specified logical functions. Also, it should be noted that the functions mentioned in the blocks may also occur in a different order in some alternative implementation examples. For example, two blocks illustrated in succession may actually be performed substantially at the same time or may sometimes be performed in the opposite order depending on the corresponding function.

Also, the term "unit" may mean a software component or a hardware component, such as a field-programmable gate array (FPGA) or an application-specific integrated circuit (ASIC), and the "unit" may perform some functions. However, the "unit" is not limited to software or hardware. The "unit" may be configured to be in an addressable storage medium or may be configured to operate one or more processors. Thus, as an example, the "unit" may include components such as software components, object-oriented software components, class components, and task components and may include processes, functions, attributes, procedures, subroutines, segments of program code, drivers, firmware, microcode, circuits, data, databases, data structures, tables, arrays, and variables. A function provided by the components and "unit" may be associated with a smaller number of components and "unit" or may be divided into additional components and "units". In addition, the components and "units" may be implemented to operate one or more central processing units (CPUs) in a device or a security multimedia card. Also, the "unit" may include one or more processors.

In the following description, terms for identifying access nodes, terms referring to network entities, terms referring to messages, terms referring to interfaces between network entities, and terms referring to various identification information are used for convenience of description. Thus, the disclosure is not limited to the terms used below and other terms referring to objects having equivalent technical meanings may be used.

Hereinafter, for convenience of description, the disclosure may use terms and names defined in the standards for 5G, new radio (NR), and LTE systems. However, the disclosure is not limited to those terms and names and may also be similarly applied to systems according to other standards.

In particularly describing the embodiments of the disclosure, the communication standards defined in 3^{rd} Generation Partnership Project (3GPP) will be mainly targeted; however, the subject matter of the disclosure may also be applied to other communication systems having similar technical backgrounds with some modifications without materially departing from the scope of the disclosure, which may be possible by the judgment of those of ordinary skill in the technical field of the disclosure.

In particularly describing the embodiments of the disclosure, vehicle communication services will be mainly targeted; however, the subject matter of the disclosure may also be applied to other services provided in the 5G networks with some modifications without materially departing from the scope of the disclosure, which may be possible by the judgment of those of ordinary skill in the technical field of the disclosure. In other words, a proximity service (ProSe) layer described in the disclosure may mean an overall layer that performs a control operation for a device-to-device (D2D) or ProSe communication service. The ProSe layer may mean a layer that exists on an access stratum (AS) layer and exchanges signaling with the AS layer for a D2D communication connection.

The 5G system considers supporting various services compared with the existing 4G system. For example, the most representative services of the 5G system may include enhanced mobile broadband (eMBB) service, ultra-reliable and low-latency communication (URLLC) service, and massive machine type communication (mMTC) service, and evolved multimedia broadcast/multicast service (eMBMS). Also, a system providing a URLLC service may be referred to as a URLLC system, and a system providing an eMBB service may be referred to as an eMBB system. Also, the terms "service" and "system" may be used interchangeably.

Hereinafter, the disclosure relates to a method and apparatus for supporting various services in a wireless communication system. Particularly, the disclosure describes a technology for supporting various services by supporting mobility of terminals in a wireless communication system.

In the following description, terms for identifying access nodes, terms referring to network entities or NFs, terms referring to messages, terms referring to interfaces between network entities, and terms referring to various identification information are used for convenience of description. Thus, the disclosure is not limited to the terms used below and other terms referring to objects having equivalent technical meanings may be used.

Hereinafter, terms and names defined in the 3GPP LTE and 5G standards may be used for convenience of description. However, the disclosure is not limited to those terms and names and may be equally applied to systems according to other standards.

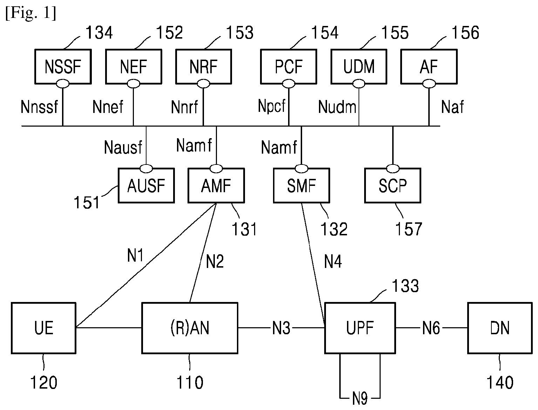

FIG. 1 is a diagram illustrating a wireless communication system, according to an embodiment.

Referring to FIG. 1, a radio access node (RAN) 110 and a UE 120 are illustrated as nodes using a radio channel in a wireless communication system. Although FIG. 1 illustrates only one RAN 110 and one UE 120, another RAN that is the same as or similar to the RAN 110 may be further included. Also, in FIG. 1, only a case in which one UE 120 communicates in one RAN 110 is illustrated. However, it may be apparent that a plurality of UEs may communicate in coverage of one RAN 110.

The RAN 110 may be a network infrastructure that provides radio access to the UE 120. The RAN 110 may have a coverage defined as a certain geographic area based on a distance at which a signal may be transmitted. In addition to a base station, the RAN 110 may be referred to as an "access point" (AP), an "eNodeB" (eNB), a "5G node", a "wireless point", a "transmission/reception point" (TRP), or other terms having an equivalent technical meaning thereof.

The UE 120 may be an apparatus used by a user and may perform communication with the RAN 110 through a radio channel. In some cases, the UE 120 may be operated without user involvement. For example, the UE 120 may be an apparatus performing machine type communication (MTC) and may not be carried by a user. The UE 120 illustrated in FIG. 1 may include at least one portable device carried by a user and may include at least one MTC. The UE 120 of FIG. 1 may be referred to as a "terminal", a "mobile station", a "subscriber station", a "remote terminal", a "wireless terminal", a "user device", or other terms having an equivalent technical meaning thereof.

An AMF entity 131 may be a network entity that manages the mobility of the UE 120. An SMF entity 132 may be a network entity that manages the connection of a packet data network for providing packet data to the UE 120. The connection between the UE 120 and the SMF 132 may be a protocol data unit (PDU) session.

A user plane function (UPF) entity 133 may be a gateway for transmitting packets transmitted/received by the UE 120 or a network entity functioning as a gateway. The UPF entity 133 may be connected to a data network (DN) 140 connected to the Internet to provide a path for transmitting/receiving data between the UE 120 and the DN 140. Thus, the UPF entity 133 may route data, which is to be transmitted to the Internet among the packets transmitted by the UE 120, to the Internet data network.

An NSSF entity 134 may be a network entity that performs a network selection operation such as a network slice selection operation. The operation of the NSSF entity 134 will be described in more detail in the drawings described below.

An authentication server function (AUSF) entity 151 may be a network entity that provides a subscriber authentication service.

A network exposure function (NEF) entity 152 may be a network entity that may access information for managing the UE 120 in the 5G network and may transmit a subscription for a mobility management event of the UE, a subscription for a session management event of the UE, a request for session-related information, a charging information configuration of the UE, a PDU session policy change request for the UE, and a small amount of data about the UE.

A network repository function (NRF) entity 153 may be an NF or network entity storing an NF profile containing detailed information of each NF or status information of an NF or an NF instance, and may transmit the NF profile or the status information stored therein at the request of another NF.

A policy and charging function (PCF) entity 154 may be a network entity that applies a service policy, a charging policy, and a PDU session policy of a mobile communication service provider to the UE 120.

A unified data management (UDM) entity 155 may be a network entity that stores information about a subscriber and/or the UE 120.

An application function (AF) entity 156 may be an NF (network entity) that has a function of providing a service to users by interworking with a mobile communication network.

A service communication proxy (SCP) entity 157 may be an NF (network entity) that provides functions such as NF discovery for communication between NFs and message transmission between NFs. The SCP entity 157 may operate in an integrated form with the NRF (153) according to selection by the service provider, and in this case, the SCP entity 157 may include a function of the NRF entity 153 or the NRF entity 153 may include a function of the SCP entity 157.

Hereinafter, for convenience of description, objects exchanging information for access control and state management will be collectively described as an NF. The NF may be, for example, at least one of an AMF entity, an SMF entity, or an NSSF entity. However, embodiments of the disclosure may be equally applied even when the NF is actually implemented as an instance (e.g., an AMF instance, an SMF instance, or an NSSF instance).

In the disclosure, an "instance" may mean a state in which a particular NF exists in the form of software code and is capable of executing physical and/or logical resources allocated from a computing system in order to perform a function of an NF in a physical computing system existing on a core network. Thus, the AMF instance, the SMF instance, and the NSSF instance may mean capable of using physical and/or logical resources allocated from a particular computing system existing on the core network for an AMF operation, an SMF operation, and NSSF operations, respectively. Consequently, the AMF instance, the SMF instance, and the NSSF instance, which use physical and/or logical resources allocated from a particular computing system existing on the core network for AMF, SMF, and NSSF operations, may perform the same operations as in the case of physical AMF, SMF, and NSSF apparatuses. Thus, an item described as an NF (an AMF, an SMF, a UPF, an NSSF, an NRF, or an SCP) may be replaced with an NF instance or an item described as an NF instance may be replaced with an NF. Likewise, an item described as an NW slice may be replaced with an NW slice instance or an item described as an NW slice instance may be replaced with an NW slice.

Moreover, a data rate may be applied to a downlink or an uplink. When a separate data rate value is applied to the uplink and/or downlink, signaling may also be separately transmitted. A data rate for a network slice (NW slice aggregated maximum bit rate for downlink) may be configured in the case of the downlink, and a data rate for a network slice (NW slice aggregated maximum bit rate for uplink) may be configured in the case of the uplink.

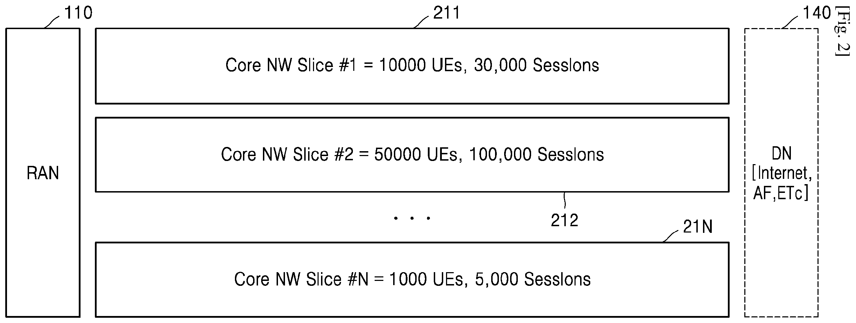

FIG. 2 is a diagram illustrating a configuration of a wireless communication system, according to an embodiment.

Referring to FIG. 2, a mobile communication system (a service provider network such as 5G or 4G) includes a radio base station, for example, a RAN 110, and one or more core network slices. In FIG. 2, N core network slices 211, 212, ..., 21N are illustrated. The RAN 110 may transmit/receive data between a UE 120 and a DN 140 through at least one core network slice. Also, according to the service provider network configuration, a core network may be configured in the form of slices or without slices, and may coexist between them. One core network slice may basically include NFs of one or more core networks. NFs corresponding to one core network may include an AMF 131, an SMF 132, and a UPF 133. Also, the NF may include at least one or more components among the AMF 131, the SMF 132, and the UPF 133. In addition, the NF may further include other network function entities in addition to the AMF 131, the SMF 132, and the UPF 133. Additionally, the NF may include at least one or more components among the AMF 131, SMF 132, and UPF 133 and may further include at least one additional entity.

Each of the network slices 211, 212, ..., 21N may provide a service suitable for each characteristic, and the capacities that may be simultaneously provided by the respective network slices 211, 212, ..., 21N may be different from each other. The capacity of each of the network slices 211, 212, ..., 21N may be, for example, the maximum number of UEs (subscribers) or the number of sessions. Each of the network slices 211, 212, ..., 21N may control access to the network according to its own capacity.

Referring to FIG. 2, a case in which a first network slice 211 may be accessed by 10,000 UEs and accommodate 30,000 sessions is illustrated. A case in which a second network slice 212 may be accessed by 50,000 UEs and accommodate 100,000 sessions is illustrated. Also, a case in which an N^{th} network slice 21N may be accessed by 1,000 UEs and accommodate 5,000 sessions is illustrated.

As illustrated in FIG. 2, the capacity of each of the network slices 211, 212, ..., 21N may be configured differently for each slice according to the configuration of the mobile communication service provider. When a particular slice is leased or sold to a separate service provider, the capacity thereof may be set differently for each slice according to the service level agreement (SLA).

The capacity (or quota) of one network slice may be expressed as at least one of the following five (5) parameters.
1. The maximum number of subscribers, UEs, or users that may simultaneously access a network slice
2. The maximum number of PDU sessions that may be simultaneously supported in a network slice
3. The maximum number of IP flows that may be simultaneously supported in a network slice
4. The maximum number of quality of service (QoS) flows that may be simultaneously supported in a network slice
5. The maximum number of guaranteed bit rate (GBR) flows that may be simultaneously supported in a network slice

The capacity of one network slice may be configured as the number of terminals that may be simultaneously connected (parameter 1) and the maximum number of sessions that may be simultaneously supported (parameter 2), as illustrated in FIG. 2. Also, the capacity of one network slice may be configured by using at least one or two or more of the above parameters.

Moreover, parameters related to the session and flow (e.g., in the case of the numbers 2 to 5 among the above parameters) may be expressed as a certain value for each slice (e.g., 10,000 sessions are supported per network slice) or may be expressed as a particular value per connected UE (e.g., up to four sessions are simultaneously supported for each UE connected to a network slice).

Through capacity control for each network slice, the mobile communication network of the service provider may be protected from overload, the network resources may be effectively used, and accurate charging may be performed between the mobile communication service provider and the network slice user.

Moreover, when access control using the quota is performed for each network slice, there may be a case of reaching a limit value of the quota configured in an actual slice. When the quota of a slice is configured as the maximum number of sessions that may be simultaneously accessed, when an access request exceeding the quota occurs, a technology for processing this may be required. For example, 1000 sessions may be generated for a particular slice, and a service A of high priority and a service B of low priority may be provided for the slice. In this case, when the maximum number of sessions is reached, when an access request occurs, it may be necessary to provide the service A to two subscribers rather than to provide both the services A and B to one subscriber. The number of sessions for each slice may be more particularly classified and controlled by the number of PDU sessions, the number of QoS flows, and the number of IP flows.

When the quota supportable in a particular slice is configured as the maximum number of simultaneously accessible sessions, when the number of sessions has already reached the maximum for the slice targeted for a session generation and/or addition requested by the UE, the following three (3) processes may be performed.
1) Rejection of session generation and/or addition. The terminal 120 that has requested generation or addition of a session may know through a reject message that the request is rejected, and in this case, the fact that a cause for the rejection is due by the quota of the slice (i.e., the maximum value configured in the quota has been reached) may be transmitted to the UE 120. Also, the UE 120 may additionally receive a timer value allowing a re-request. When the access request is a request for generation and/or addition of a session for a particular slice and a reject occurs during a control process for the maximum number of sessions, the timer may be applied to the slice(s) and the UE 120 should not retransmit a session generation or addition request for the slice(s) until the timer expires or terminates. When the access request is a request for a session (DNN) mapped to a particular slice and a reject occurs during a control process for the maximum number of sessions, the timer may be applied to the slice(s) and the mapped DNN(s) and the UE 120 should not retransmit a session generation request for the slice(s) and the mapped DNN(s) until the timer terminates or expires. When the timer terminates or expires, the UE 120 may retransmit an access or session generation request.
2) Acceptance of new request after session deletion. When a slice targeted for session generation and/or addition requested by the UE 120 (or a DNN additionally mapped to a slice) reaches the maximum number of sessions, the network may compare the priorities for a previously generated session with respect to a new request and the slice and select a session and a UE to be deleted (released), when there is a session having a lower priority. A deletion procedure is performed on the selected session, and a new session generation and/or addition request may be processed after available resources are secured. When there is no other session or terminal to be deleted, a rejection response may be transmitted in response to the new request.
3) Acceptance after service quality change. When a slice targeted for session generation and/or addition requested by the UE 120 (or a DNN additionally mapped to a slice) reaches the maximum number of sessions, a service may be provided with a QoS of a lower level than a default QoS configured by request or subscription information. Decreasing the level of QoS may include one or more of:
   decreasing the maximum allowed data rate;
   changing a GBR flow to a non-GBR flow;
   adjusting a 5QI (decrease down to a 5QI with a lower relative priority);
   decreasing an allocation and retention priority (ARP) to a lower one; and/or
   limiting the maximum number of flows belonging to a session.

Moreover, when access control using the quota is performed for each network slice, there may be a case of reaching a limit value of the quota configured in an actual slice. When the quota of a slice is configured as the maximum number of simultaneously connected accessors (or UEs), when an access request exceeding the quota occurs, a technology for processing this may be required.

A method of processing an access request generated when the maximum number of simultaneously connected accessors reaches a limit of the quota includes the following two (2) steps.
1) Reject access. The UE that has transmitted an access request may know through a Reject message that the access request has been rejected, and in this case, the terminal may know that a cause for the rejection is due by the quota of the slice (i.e., the maximum value configured in the quota has been reached). Also, the UE may receive a timer value for allowing a re-access request. When the access request is a registration request for slice(s) and a reject occurs during a control process for the maximum number of accessors, the timer may be applied to the slice(s) and the UE should not retransmit an access request for the slice(s) until the timer terminates or expires. When the access request is a request for a session (data network name (DNN)) mapped to a particular slice and a reject occurs during a control process for the maximum number of sessions, the timer may be applied to the slice(s) and the mapped DNN(s) and the UE should not retransmit a session generation request for the slice(s) and the mapped DNN(s) until the timer terminates or expires. When the timer terminates or expires, the UE may retransmit an access or session generation request.
2) Fallback to another slice or radio access technology (RAT). Another slice may be selected instead of an access-requested slice (fallback) and an access (or session generation) process may be performed on the UE. In this case, information indicating whether fallback is allowed and default slice information or RAT information to be targeted for fallback may be included in subscription information through UDM or may be included an access control policy through PCF, or a value configured in the AMF/SMF may be used. When a fallback to another slice occurs, the UE that has transmitted an access request may know, through a message, that the access (or session generation) request has been accepted. In this case, the message may include information indicating that the use thereof has been refused because the maximum allowed capacity has been exceeded for the slice that has been access-requested by the UE but a fallback to another slice has occurred. When a fallback to another RAT occurs, the currently received registration request may be rejected and information for movement to another RAT may be provided; or the currently received registration request may be accepted, a rejection may be made due to the excess of capacity with respect to the slices requested by the UE, and information for transition to another RAT may be included. Also, the UE may receive a timer value for allowing a re-access request. When the access request is a registration request for slice(s) and a fallback occurs during a control process for the maximum number of accessors, the timer may be applied to the slice(s) and the UE should not retransmit a change request for the slice(s) until the timer terminates or expires. When the access request is a request for a session (DNN) mapped to a particular slice and a fallback to another DNN occurs during a control process for the maximum number of sessions, the timer may be applied to the slice(s) and the mapped DNN(s) and the UE should not retransmit a session generation change request for the slice(s) and the mapped DNN(s) until the timer terminates or expires. When the timer terminates or expires, the UE may retransmit an access or session generation request to change the slice. When the 5GC (5G Core) knows that access to a slice to which fallback is applied is possible, a message indicating that access is possible by changing to the originally requested slice(s) or DNN may be transmitted to the UE. In this case, the message indicating the change may include information indicating that an NF change, such as AMF or SMF due to the changed slice and a NAS procedure therefor, should be performed. When the NF change is unnecessary, the UE that has received the same may operate assuming that the slice has been changed, and when the NF change is necessary, an operation for processing the same (registration in the case of an AMF change, or a PDU session establishment in the case of an SMF change) may be performed.

The use of a particular slice may be explicitly stored/registered in the UDM during a PDU session generation process or a registration process of the UE, and accordingly, the status of each slice (the number of currently connected UEs or the number of currently used PDU sessions) may be determined and the access control may be performed when the status of each slice reaches the upper limit of the quota for each slice (the maximum number of supportable UEs or the maximum number of supportable PDU sessions). In the above-mentioned embodiment, a PCF may be used and operate based on a policy for using the slice instead of subscription information; and whether to use the slice during the registration/session generation process, may be explicitly stored in the PCF, and accordingly, the status of each slice (the number of currently connected UEs or the number of currently used PDU sessions) may be determined and the access control may be performed according to a policy for the quota for each slice (the maximum number of supportable UEs or the maximum number of supportable PDU sessions).

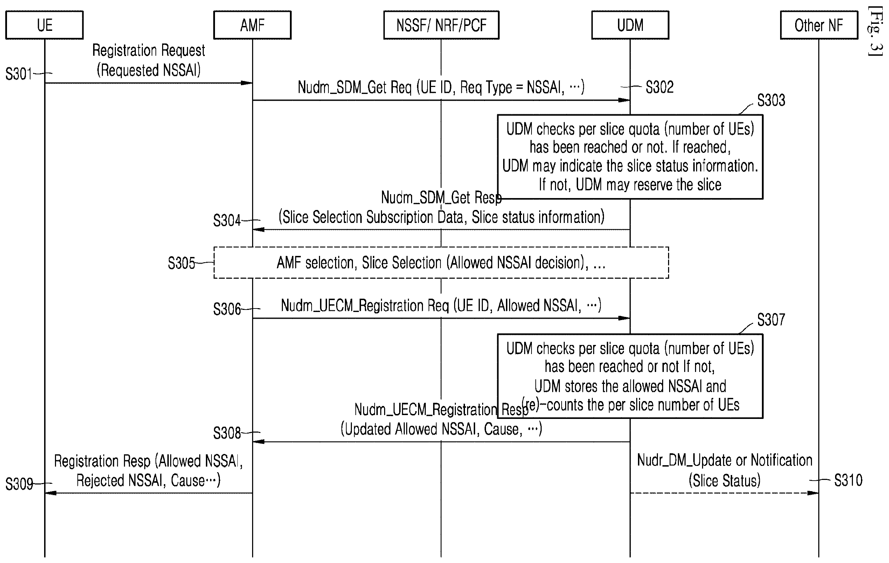

FIG. 3 is a flowchart illustrating a method of performing network slice control, according to an embodiment.

In step S301, the UE transmits a registration request including information for accessing a particular slice (one or more) to the AMF.

In step S302, the AMF transmits a Nudm_SDM_Get request when it is necessary to receive subscription information from the UDM to process the registration request of the UE. In this case, the request transmitted by the AMF may include a UE (subscriber) ID (SUPI, SUCI, or GPSI.]) and may indicate that subscription information for slice selection is included in the information requested by the AMF.

In step S303, the UDM may perform an operation for transmitting slice-related subscription information for a subscriber according to an AMF request. When the subscription information is stored in a unified data repository (UDR), the UDM may transmit a query for reception to the UDR. The UDM may determine a current quota (the maximum allowed number of UEs for each slice or the maximum number of sessions) in the slice belonging to subscribed NSSAI (S-NSSAI) (a set of S-NSSAIs allowed to the subscriber in the subscription information) in the slice subscription information and may determine whether the upper limit of the quota has already been reached. When there is a slice (one or more S-NSSAIs) in a state where the terminal is available (i.e., the upper limit of the quota has not been reached), the UDM may reserve the slice to allow the UE to use the slice, and a reservation state may be switched to a confirmed or in-use state when the slice (S-NSSAI) is included in the registration (Nudm_UECM_Registration) request for the UE received from the AMF. Also, the UDM may start a timer for slices in a reserved state and release the reserved state when an explicit registration request is not received until after the timer expires.

In step S304, the UDM transmits a Nudm_SDM_Get response containing the subscriber's subscription information in response to the AMF request. In this case, the response may contain subscription information that the AMF may use for slice selection, and particularly, when the upper limit of the quota has already been reached for a particular slice, information for notifying the same may be included for each slice. When a slice reservation occurs in step S303, information (reservation availability information or timer information) for notifying the same may be included.

In step S305, the AMF performs a procedure such as AMF selection or slice selection (determination of allowed NSSAI) during the registration process by using the information received from the UDM in step S304. When an AMF relocation occurs, the AMF may be changed to a new AMF

In step S306, the AMF selected to process registration for the UE transmits a Nudm_UECM_Registration request for registering itself as an AMF for the UE to the UDM, and in this case, the ID of the UE may be included and the NSSAI allowed for the UE may also be included. During this process, the slice (NSSAI) information may include only slices (S-NSSAIs) targeted for quota limitation.

In step S307, by using the allowed NSSAI received from the AMF, the UDM updates the availability of the slice to which the quota-based control is applied and the current status of use of the slice. Particularly, with respect to the received NSSAI, the UDM may determine whether the received NSSAI is subject to quota limitation for each S-NSSAI included in the NSSAI, and in the case of a new slice that has not been used by the UE (subscriber), may determine whether the slice has not reached the upper limit of the quota limitation. When the slice does not reach the upper limit of the quota limitation, the status of the slice may be updated (i.e., the number of UEs to be used may be increased). When the existing information stored in the UDM does not include information about the slice in use for the UE in the NSSAI, the status of the slice may be updated (i.e., the number of UEs to be used may be reduced). When the slice has already reached the upper limit of the quota, the status information may be notified to the AMF in step S308, and in this case, the status of the slice (i.e., the number of UEs to be used) may not be updated. When a particular slice is reserved in the above operation, the reservation may be released or updated to a confirmed or in-use status. Also, subscriber-specific status information (i.e., a context) may be stored including a list of slices currently being used by the subscriber. Also, the UDM may store/update a list of subscribers in use for each slice (S-NSSAI).

In step S308, the UDM transmits a response AMF Nudm_UECM_Registration response based on the request of the AMF, and when there is a slice that has already reached the upper limit of the quota among the slices allowed for the UE in step S307, the response includes an indication for notifying the same.

In step S309, when the AMF has received an indication that the upper limit of the quota for the slice has already been reached among the information received from the UDM, the AMF determines at least one allowed NSSAI and at least one rejected NSSAI, in consideration of the received indication and transmits a registration response to the UE.

In step S310, the UDM stores current status information of a particular slice (the number of UEs currently in use for each slice, a list of subscriber identifiers in use for each slice, or whether the upper limit of the quota has been reached for each slice) and notifies the same to other NFs (for example, the UDR, the AMF, the SMF, the NSSF, and the NRF). Particularly, the UDM may store slice use information in the UDR through a Nudr_DM_Update request, and the UDR may expose the same to another NF. In this case, other NFs are not limited thereto, and any network entity capable of performing a function related to slice control as well as the NF described above in FIG. 1 may be used.

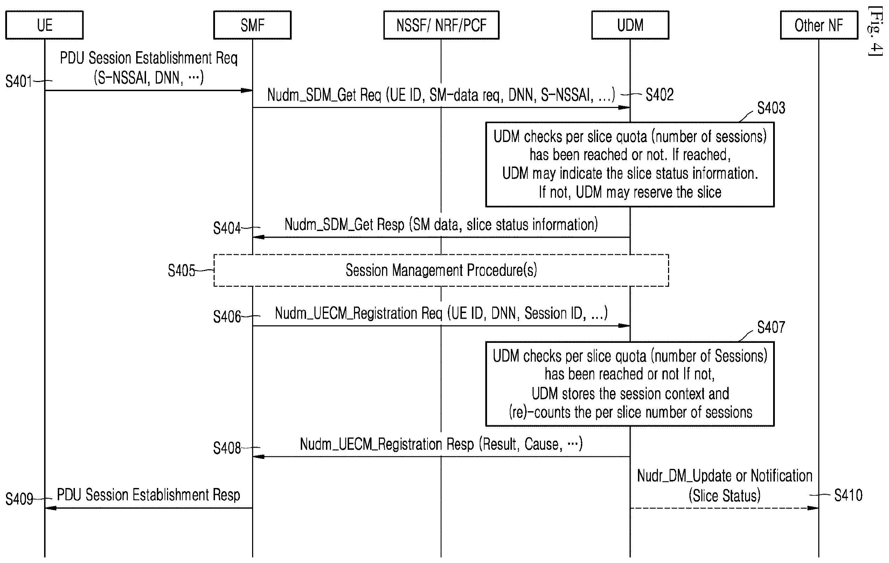

FIG. 4 is a flowchart illustrating a method of performing network slice control, according to an embodiment.

In step S401, the UE transmits a PDU session establishment request including information for generating a PDU Session to the AMF, and the AMF transmits the same to the SMF.

In step S402, the SMF transmits a Nudm_SDM_Get request when it is necessary to receive subscription information from the UDM to process a PDU session generation request of the UE. In this case, the request transmitted by the SMF may include a UE (subscriber) ID (SUPI, SUCI, or GPSI), and the SMF may indicate that subscription information for selection management is included in the transmitted request information. Also, S-NSSAI or DNN to be targeted for the session requested by the current UE may be included in the request information.

In step S403, the UDM performs an operation for transmitting session management-related subscription information for the subscriber according to an SMF request. When the subscription information is stored in a UDR, the UDM may transmit a query for reception to the UDR. When the request received from the SMF includes S-NSSAI (or S-NSSAI and DNN), the UDM may be determine a current quota (the maximum number of allowed UEs for each slice or the maximum number of sessions) with respect to the S-NSSAI (or S-NSSAI and DNN) and may determine whether the upper limit of the quota has already been reached. When there is a slice (one or more S-NSSAIs or a combination of S-SNSSAI and DNN) in a state where the terminal is available (i.e., the upper limit of the quota has not been reached), the UDM may reserve the slice to allow the UE to use the slice, and a reservation state may be switched to a confirmed or in-use state when the slice (S-NSSAI) is included in the registration (Nudm_UECM_Registration) request for the UE received from the SMF. Also, the UDM may start a timer for slices in a reserved state and release the reserved state when an explicit registration request is not received until the timer expires.

In step S404, the UDM transmits a Nudm_SDM_Get response including subscriber's subscription information in response to the request of the SMF. In this case, the response may include subscription information that the SMF may use for session generation, and particularly, when the upper limit of the quota has already been reached for a particular slice, information for notifying the same may be included for each slice. When a slice reservation occurs in step S403, information (reservation availability or timer) for notifying the same is included in the response.

In step S405, the SMF performs procedures for session generation.

In step S406, the SMF transmits a Nudm_UECM_Registration request for registering itself as an SMF for the UE to the UDM, and in this case, the ID of the PDU Session, the ID of the UE, DNN, and S-NSSAI may be included in the request. During this process, the slice information (NSSAI) information may include only slices (S-NSSAIs) targeted for quota limitation.

In step S407, by using the S-NSSAI (or a combination of S-NSSAI and DNN) received from the SMF, the UDM may update the availability of the slice to which the quota-based control is applied and the current status of use of the slice. Particularly, with respect to the received S-NSSAI, the UDM may determine whether it is subject to the quota limitation (that is, the maximum number of PDU sessions that may be simultaneously provided), and when a session is generated in a new slice not used by the UE (subscriber), the UDM may determine whether the slice has not reached the upper limit of the quota limitation. When the slice has not reached the upper limit of the quota limitation, the status of the slice may be updated (i.e., the number of sessions to be used or the number of UEs may be increased). When the quota of the slice is controlled by a combination of S-NSSAI and DNN, the above operation may be performed separately for each DNN. When the slice has already reached the upper limit of the quota (i.e., the limit of the number of PDU sessions supportable in the slice has been reached), the status information may be notified to the SMF in step S408, and in this case, the status of the slice (i.e., the number of sessions to be used) may not be updated. When a particular slice is reserved in the above operation, the reservation may be released or updated to a confirmed or in-use status. Also, subscriber-specific status information (context) may be stored including a list of sessions generated for each slice currently being used by the subscriber. Also, the UDM may store/update a list of subscribers in use and the ID of a session for each slice (S-NSSAI).

In step S408, the UDM transmits an AMF Nudm_UECM_Registration response to the request of the SMF, and when there is a slice that has already reached the upper limit of the quota among the slices allowed for the UE in step S407, the response includes an indication for notifying the same.

In step S409, when the SMF receives an indication that the upper limit of the quota for the slice has already been reached among the information received from the UDM, the SMF performs an operation of determining whether to accept the generation of a PDU session, adjusting the QoS, or receiving a policy from the PCF.

In step S410, the UDM stores current status information of a particular slice (the number of sessions currently in use for each slice, a list of PDU sessions in use for each slice, or whether the upper limit of the quota has been reached for each slice) and notifies the same to other NFs (e.g., the UDR, the AMF, the SMF, the NSSF, and the NRF). Particularly, the UDM may store slice use information in the UDR through a Nudr_DM_Update request, and the UDR may expose the same to another NF. In this case, other NFs are not limited thereto, and any network entity capable of performing a function related to slice control as well as the NF described above in FIG. 1 may be used.

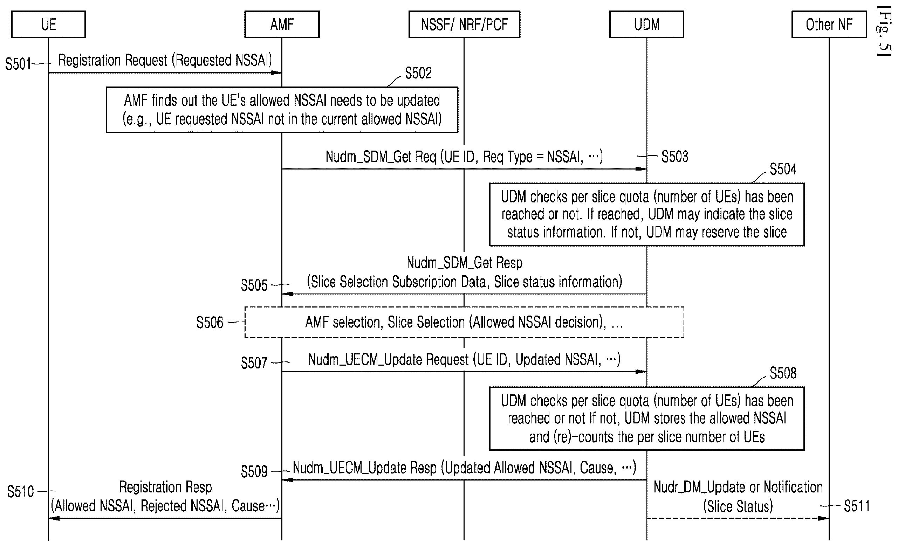

FIG. 5 is a flowchart illustrating a method of performing network slice control, according to an embodiment.

In step S501, the UE transmits a registration request including information for accessing one or more particular slices to the AMF.

In step S502, the AMF stores (or receives from another AMF) a UE context for the UE and the UE context may include allowed NSSAI. The AMF may know whether the requested NSSAI of the registration request transmitted by the UE is different from the stored allowed NSSAI (i.e., the UE requests access to another slice).

In step S503, the AMF transmits a Nudm_SDM_Get request when it is necessary to receive subscription information from the UDM to process the registration request of the UE. In this case, the request transmitted by the AMF may include a UE (subscriber) ID (SUPI, SUCI, or GPSI) and may indicate that subscription information for slice selection is included in the information requested by the AMF.

In step S504, the UDM performs an operation for transmitting slice-related subscription information for a subscriber according to an AMF request. When the subscription information is stored in a UDR, the UDM may transmit a query for reception of the subscription information to the UDR. The UDM may be determine a current quota (the maximum allowed number of UEs for each slice or the maximum number of sessions) in the slice belonging to subscribed NSSAI (a set of S-NSSAIs allowed to the subscriber in the subscription information) in the slice subscription information and may determine whether the upper limit of the quota has already been reached. When there is a slice (one or more S-NSSAIs) in a state where the terminal is available (i.e., the upper limit of the quota has not been reached) and there is a slice not yet used by the subscriber, the UDM may reserve the slice to allow the UE to use the slice, and a reservation state may be switched to a confirmed or in-use state when the slice (S-NSSAI) is included in the registration (Nudm_UECM_Registration) request for the UE from the AMF. Also, the UDM may start a timer for slices in a reserved state and release the reserved state when an explicit registration request is not received until the timer expires.

In step S505, the UDM transmits a Nudm_SDM_Get response including subscriber's subscription information in response to the request of the AMF. In this case, the response may include subscription information that the AMF may use for slice selection, and particularly, when a particular slice has already reached the upper limit of the quota, information for notifying the same may be included in the response for each slice. When a slice reservation occurs in step S504, information (reservation availability information or timer information) for notifying the same is included in the response.

In step S506, the AMF performs a procedure such as AMF selection or slice selection (allowed NSSAI determination) during the registration process by using the information received from the UDM. In this case, when an AMF relocation occurs, the AMF may be a new AMF that has been changed.

In step S507, when an AMF is changed, the AMF transmits a Nudm_UECM_Registration request for registering itself as an AMF for the UE to the UDM, and in this case, the ID of the UE may be included and the NSSAI allowed for the UE may also be included. During this process, the slice information (NSSAI) information may include only slices (S-NSSAIs) targeted for quota limitation. When the AMF is not changed, the AMF may transmit a Nudm_UECM_Update request for updating information about the UE (subscriber) to the UDM. This message may include the ID of the UE (subscriber) and the NSSAI updated for the UE. The updated NSSAI may include all of the allowed NSSAI updated while being performed up to step S506 or may explicitly include a difference from the allowed NSSAI about the UE (a newly added S-NSSAI or a missing S-NSSAI).

In step S508, by using the NSSAI received from the AMF, the UDM updates the availability of the slice to which the quota-based control is applied and the current status of use of the slice. Particularly, with respect to the received NSSAI, the UDM may determine whether the received NSSAI is subject to quota limitation for each S-NSSAI included in the NSSAI, and in the case of a new slice that has not been used by the UE (subscriber), and may determine whether the slice has not reached the upper limit of the quota limitation. When the slice has not reached the upper limit, the status of the slice may be updated (i.e., the number of UEs to be used may be increased). When the existing information stored in the UDM does not include the slice in use for the UE in the received NSSAI, the status of the slice may be updated (i.e., the number of UEs to be used may be reduced). When the slice has already reached the upper limit of the quota, the status information may be notified to the AMF in step S509, and in this case, the status of the slice (i.e., the number of UEs to be used) may not be updated. When a particular slice is reserved in the above operation, the reservation may be released or updated to a confirmed or in-use status. Also, subscriber-specific status information (a context) may store a list of slices currently being used. Also, the UDM may store/update a list of subscribers in use for each slice (S-NSSAI).

In step S509, the UDM transmits a response AMF Nudm_UECM_Registration or Nudm_UECM_Update Response to the request of the AMF, and when there is a slice that has already reached the upper limit of the quota among the slices in the response, an indication for notifying the same may be included therein.

In step S510, when the AMF has received an indication that the upper limit of the quota for the slice has already been reached among the information received from the UDM, the AMF determines allowed NSSAI and rejected NSSAI in consideration of the same and transmits a registration response to the UE.

In step S511, the UDM stores current status information of a particular slice (the number of UEs currently in use for each slice, a list of subscriber identifiers in use for each slice, or whether the upper limit of the quota has been reached for each slice) and notifies the same to other NFs (e.g., the UDR, the AMF, the SMF, the NSSF, and the NRF). Particularly, the UDM may store slice use information in the UDR through a Nudr_DM_Update request, and the UDR may expose the same to another NF.

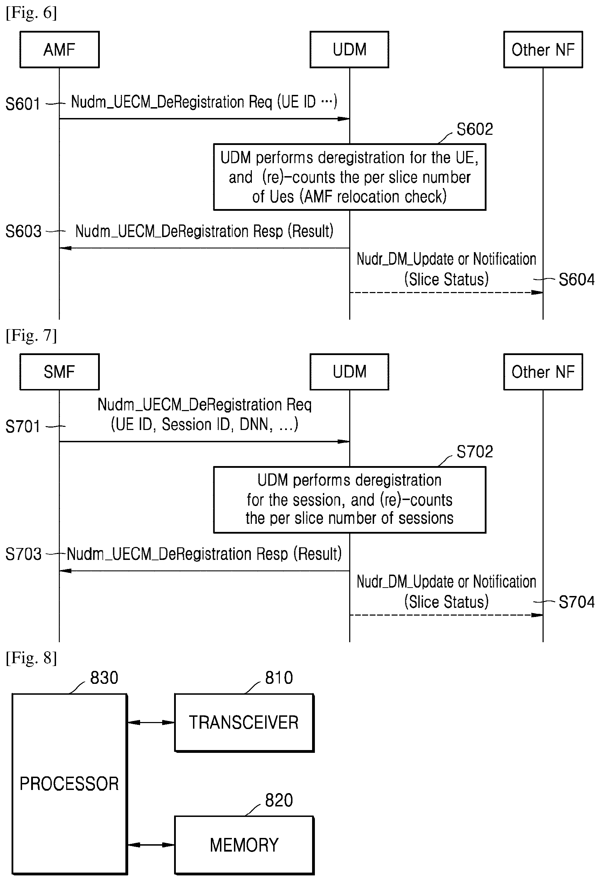

FIG. 6 is a flowchart illustrating a terminal deregistration procedure, according to an embodiment.

In step S601, when deregistration is required for a particular UE (subscriber) (when a request is received from the UE or a condition for deregistration is satisfied in the network), the AMF transmits a message for requesting deregistration to the UDM, and in this case, a subscriber ID may be included therein.

In step S602, when the UDM receives a deregistration request for the UE from the AMF, or when a deregistration for the UE occurs due to other conditions, the UDM updates use information about the slice in the process of processing the same. That is, it may be determined whether each slice currently in use for the UE is subject to quota limitation, and in the case of a slice subject to quota limitation, the status of the slice may be updated (i.e., the number of UEs using the slice may be reduced). When the deregistration does not terminate or stop using the actual UE such as an AMF change, such an update process may be omitted or suspended.

In step S603, when the AMF requests deregistration, the UDM transmits a response thereto.

In step S604, the UDM stores/updates current status information of a particular slice (the number of UEs currently in use for each slice, a list of subscriber identifiers in use for each slice, or whether the upper limit of the quota has been reached for each slice) and notifies the same to other NFs (e.g., the UDR, the AMF, the SMF, the NSSF, and the NRF). Particularly, the UDM may store information including slice use information in the UDR through a Nudr_DM_Update request, and the UDR may expose the information to another NF.

FIG. 7 is a flowchart illustrating a terminal deregistration procedure, according to an embodiment.

In step S701, when deregistration is required for a particular UE (subscriber) (when a session deletion request is received from the UE or a condition for session deletion or deregistration is satisfied in the network), the SMF transmits a message for requesting deregistration to the UDM, and in this case, a PDU session ID may be included therein and a UE ID, DNN, or S-NSSAI may be included therein.

In step S702, when the UDM receives a deregistration request for the session from the SMF, or when a deregistration for the session occurs due to other conditions, the UDM updates use information about the slice in the process of processing the same. That is, the UDM may determine whether the UE is subject to the quota limitation for each slice currently in use (the maximum number of sessions in the present embodiment), and in the case of a slice subject to quota limitation, the status of the slice (i.e., the number of PDU sessions in use) may be updated and other slice information may be additionally updated (the number of UEs in use may be reduced). When the deregistration does not terminate or stop using the actual UE such as an SMF change, such an update process may be omitted or suspended.

In step S703, when the SMF requests deregistration, the UDM transmits a response thereto.

In step S704, the UDM stores/updates current status information of a particular slice (the number of UEs currently in use for each slice, a list of subscriber identifiers in use for each slice, or whether the upper limit of the quota has been reached for each slice) and notifies the same to other NFs (e.g., the UDR, the AMF, the SMF, the NSSF, and the NRF). Particularly, the UDM may store slice use information in the UDR through a Nudr_DM_Update request, and the UDR may expose the same to another NF.

FIG. 8 is a diagram illustrating a configuration of a terminal, according to an embodiment.

As illustrated in FIG. 8, a terminal includes a transceiver 810, a memory 820, and a processor 830. The processor 830, the transceiver 810, and the memory 820 of the terminal may operate according to the above communication method of the UE. However, the components of the terminal are not limited thereto. For example, the terminal may include more components or fewer components than the above components. In addition, the processor 830, the transceiver 810, and the memory 820 may be implemented as a single chip.

The transceiver 810 may collectively refer to a receiver and a transmitter of the terminal and may transmit/receive signals to/from a base station or a network entity. The signals transmitted/received to/from the base station may include control information and data. For this purpose, the transceiver 810 may include, for example, a radio frequency (RF) transmitter for up-converting and amplifying a transmitted signal and an RF receiver for low-noise-amplifying and down-converting a received signal. However, this is merely an embodiment of the transceiver 810, and the components of the transceiver 810 are not limited to the RF transmitter and the RF receiver.

Also, the transceiver 810 may receive a signal through a radio channel and output the signal to the processor 830 and may transmit a signal output from the processor 830, through a radio channel.

The memory 820 may store programs and data necessary for the operation of the terminal. Also, the memory 820 may store control information or data included in the signals obtained by the terminal. The memory 820 may include a storage medium or a combination of storage media such as a read only memory (ROM), a random access memory (RAM), a hard disk, a compact disc ROM (CD-ROM), and a digital versatile disc (DVD).

Also, the processor 830 may control a series of processes such that the terminal may operate according to the above embodiments. The processor 830 may include one or more processors. For example, the processor 830 may include a communication processor (CP) for performing control for communication and an application processor (AP) for controlling an upper layer such as an application program.

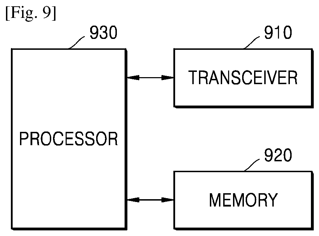

FIG. 9 is a diagram illustrating a configuration of a network entity, according to an embodiment.

As illustrated in FIG. 9, a network entity includes a transceiver 910, a memory 920, and a processor 930. The processor 930, the transceiver 910, and the memory 920 of the network entity may operate according to the above communication method of the network entity. However, the components of the network entity are not limited thereto. For example, the network entity may include more components or fewer components than the above components. In addition, the processor 930, the transceiver 910, and the memory 920 may be implemented as a single chip. The network entity may include, but is not limited to, NFs such as the AMF, the SMF, the PCF, the NEF, the UDM, and the UPF described above. Also, the network entity may include a base station.

The transceiver 910 may collectively refer to a receiver and a transmitter of the network entity and may transmit/receive signals to/from the terminal or another network entity. In this case, the transmitted/received signals may include control information and data. For this purpose, the transceiver 910 may include, for example, an RF transmitter for up-converting and amplifying a transmitted signal and an RF receiver for low-noise-amplifying and down-converting a received signal. However, this is merely an embodiment of the transceiver 910, and the components of the transceiver 910 are not limited to the RF transmitter and the RF receiver. The transceiver 910 may include a wired/wireless transceiver and may include various components for transmitting/receiving signals.

Also, the transceiver 910 may receive a signal through a communication channel (e.g., a radio channel) and output the signal to the processor 930 and may transmit a signal output from the processor 930, through a communication channel.

The memory 920 may store programs and data necessary for the operation of the network entity. Also, the memory 920 may store control information or data included in the signals obtained by the network entity. The memory 920 may include a storage medium or a combination of storage media such as ROM, RAM, hard disk, CD-ROM, and DVD.

Also, the processor 930 may control a series of processes such that the network entity may operate according to the above embodiments. The processor 930 may include at least one processor.

The methods according to the embodiments described in the specification or the claims may be implemented by hardware, software, or a combination thereof.

When the methods are implemented by software, a computer-readable storage medium may be provided to store one or more programs (software modules). The one or more programs stored in the computer-readable storage medium may be configured for execution by one or more processors in an electronic device. The one or more programs may include instructions for causing the electronic device to execute the methods according to the embodiments described in the specification or the claims.

These programs (software modules or software) may be stored in RAMs, nonvolatile memories including flash memories, ROMs, electrically erasable programmable ROMs (EEPROMs), magnetic disc storage devices, CD-ROMs, DVDs, other types of optical storage devices, or magnetic cassettes. Alternatively, the programs may be stored in a memory configured by a combination of some or all of such storage devices. Also, a plurality of memories may be provided.

Also, the programs may be stored in an attachable storage device that may be accessed through a communication network such as the Internet, an intranet, a local area network (LAN), a wide area network (WAN), or a storage area network (SAN), or through a communication network configured by any combination thereof. Such a storage device may be connected through an external port to an apparatus performing an embodiment. Also, a separate storage device on a communication network may be connected to an apparatus performing an embodiment.

In particular embodiments described above, the components included in the disclosure are expressed in the singular or plural according to the particular embodiments of the disclosure. However, the singular or plural expressions are selected suitably according to the presented situations for convenience of description, the disclosure is not limited to the singular or plural components, and the components expressed in the plural may even be configured in the singular, or the components expressed in the singular may even be configured in the plural.

According to an embodiment, services may be more effectively provided.

While the present disclosure has been particularly shown and described with reference to certain embodiments thereof, it will be understood by those of ordinary skill in the art that various changes in form and details may be made therein without departing from the scope of the disclosure as defined by the appended claims.

## Claims

1. A method, performed by a first network entity, in a wireless communication system , the method comprising,
receiving, from a user equipment, UE, a registration request including at least one single network slice selection assistance information, S-NSSAI, corresponding to each requested network slice;
identifying subscription information including at least one default S-NSSAI;
determining whether the at least one S-NSSAI is allowed for the UE;
transmitting, to a second network entity, a request message, wherein the request message includes an identifier, ID, of the UE and allowed NSSAI including at least one S-NSSAI allowed for the UE based on the result of the determination;
receiving, from the second network entity, a response message including an indication whether each network slice corresponding to the S-NSSAI in the allowed NSSAI reaches an upper limit of a quota; and
transmitting, to the UE, a registration response message including rejected NSSAI that has reached the upper limit of the quota, and allowed NSSAI including at least one S-NSSAI that has not reached the upper limit of the quota or the at least one default S-NSSAI based on the response message,
wherein the first network entity is an access and mobility management function, AMF, entity, and the second network entity is a function supporting network slice access control based on the quota,
wherein at least one default S-NSSAI is used, when the each requested network slice reaches the upper limit of the quota.

2. The method of claim 1, wherein a number of UEs registered for the each network slice corresponding to the S-NSSAI is updated when the network slice has not reached the upper limit.

3. The method of claim 2, wherein the number of UEs registered for the each network slice corresponding to the S-NSSAI is increased, when the network slice has not reached the upper limit, or
wherein status information is received from the second network entity, when each network slice corresponding to the S-NSSAI has already reached the upper limit.

4. The method of claim 2,
wherein the number of UEs registered for the each network slice corresponding to the S-NSSAI is decreased, when information stored in the second network entity does not include the UE for the each network slice corresponding to the S-NSSAI.

5. A first network entity in a wireless communication system, the first network entity comprising;
a transceiver (910); and
at least one processor (930) connected with the transceiver and configured to:
receive, from a user equipment, UE, a registration request including at least one single network slice selection assistance information, S-NSSAI, corresponding to each requested network slice;
identify subscription information including at least one default S-NSSAI;
determine whether the at least one S-NSSAI is allowed for the UE;
transmit, to a second network entity, a request message, wherein the request message includes an identifier, ID, of the UE and allowed NSSAI including at least one S-NSSAI allowed for the UE based on the result of the determination;
receive, from the second network entity, a response message including an indication whether each network slice corresponding to the S-NSSAI in the allowed NSSAI reaches an upper limit of a quota; and
transmit, to the UE, a registration response message including rejected NSSAI that has reached the upper limit of the quota, and allowed NSSAI including at least one S-NSSAI that has not reached the upper limit of the quota or the at least one default S-NSSAI based on the response message,
wherein the first network entity is an access and mobility management function, AMF, entity, and the second network entity is a function supporting network slice access control based on the quota,
wherein at least one default S-NSSAI is used, when the each requested network slice reaches the upper limit of the quota.

6. The first network entity of claim 5, wherein a number of UEs registered for each network slice corresponding to the S-NSSAI is updated when the network slice has not reached the upper limit.

7. The first network entity of claim 6, wherein the number of UEs registered for the each network slice corresponding to the S-NSSAI is increased, when the network slice has not reached the upper limit, or
wherein status information is received from the second network entity, when each network slice corresponding to the S-NSSAI has already reached the upper limit.

8. The first network entity of claim 6, wherein the number of UEs registered for the each network slice corresponding to the S-NSSAI is decreased, when information stored in the second network entity does not include the UE for the each network slice corresponding to the S-NSSAI.

## Patentansprüche

1. Verfahren, das von einer ersten Netzeinheit in einem drahtlosen Kommunikationssystem durchgeführt wird, wobei das Verfahren Folgendes umfasst:
Empfangen, von einem Benutzergerät, UE, einer Registrierungsanforderung, die mindestens eine Einzelnetz-Slice-Auswahlunterstützungsinformation, S-NSSAI, enthält, die jeder angeforderten Netz-Slice entspricht;
Identifizieren von Teilnahmeinformationen, die mindestens eine Standard-S-NSSAI enthalten;
Bestimmen, ob die mindestens eine S-NSSAI für das UE zulässig ist;
Übertragen, an eine zweite Netzeinheit, einer Anforderungsnachricht, wobei die Anforderungsnachricht eine Kennung, ID, des UE und eine zulässige NSSAI enthält, die mindestens eine für das UE zulässige S-NSSAI basierend auf dem Ergebnis der Bestimmung enthält;
Empfangen, von der zweiten Netzeinheit, einer Antwortnachricht, die eine Angabe darüber beinhaltet, ob jede Netz-Slice, die der S-NSSAI in der zulässigen NSSAI entspricht, eine Obergrenze einer Quote erreicht; und
Übertragen, an das UE, einer Registrierungsantwortnachricht, die eine abgelehnte NSSAI, die die Obergrenze der Quote erreicht hat, und eine zulässige NSSAI beinhaltet, die mindestens eine S-NSSAI, die die Obergrenze der Quote nicht erreicht hat, oder die mindestens eine Standard-S-NSSAI enthält, basierend auf der Antwortnachricht,
wobei die erste Netzeinheit eine Einheit einer Zugriffs- und Mobilitätsverwaltungsfunktion, AMF, ist und die zweite Netzeinheit eine Funktion ist, die Netz-Slice-Zugriffssteuerung basierend auf der Quote unterstützt,
wobei mindestens eine Standard-S-NSSAI verwendet wird, wenn die jeweils angeforderte Netz-Slice die Obergrenze der Quote erreicht.

2. Verfahren nach Anspruch 1, wobei eine Anzahl von UEs, die für die jeweilige Netz-Slice registriert sind, die der S-NSSAI entspricht, aktualisiert wird, wenn die Netz-Slice die Obergrenze nicht erreicht hat.

3. Verfahren nach Anspruch 2, wobei die Anzahl von UEs, die für die jeweilige Netz-Slice registriert sind, die der S-NSSAI entspricht, erhöht wird, wenn die Netz-Slice die Obergrenze nicht erreicht hat, oder
wobei Statusinformationen von der zweiten Netzeinheit empfangen werden, wenn jede Netz-Slice, die der S-NSSAI entspricht, bereits die Obergrenze erreicht hat.

4. Verfahren nach Anspruch 2,
wobei die Anzahl von UEs, die für die jeweilige Netz-Slice registriert sind, die der S-NSSAI entspricht, verringert wird, wenn in der zweiten Netzeinheit gespeicherte Informationen das UE für die jeweilige Netz-Slice, die der S-NSSAI entspricht, nicht enthalten.

5. Erste Netzeinheit in einem drahtlosen Kommunikationssystem, wobei die erste Netzeinheit Folgendes umfasst:
einen Transceiver (910); und
mindestens einen Prozessor (930), der mit dem Transceiver verbunden ist und konfiguriert ist zum:
Empfangen, von einem Benutzergerät, UE, einer Registrierungsanforderung, die mindestens eine Einzelnetz-Slice-Auswahlunterstützungsinformation, S-NSSAI, enthält, die jeder angeforderten Netz-Slice entspricht;
Identifizieren von Teilnahmeinformationen, die mindestens eine Standard-S-NSSAI enthalten;
Bestimmen, ob die mindestens eine S-NSSAI für das UE zulässig ist;
Übertragen, an eine zweite Netzeinheit, einer Anforderungsnachricht, wobei die Anforderungsnachricht eine Kennung, ID, des UE und eine zulässige NSSAI enthält, die mindestens eine für das UE zulässige S-NSSAI basierend auf dem Ergebnis der Bestimmung enthält;
Empfangen, von der zweiten Netzeinheit, einer Antwortnachricht, die eine Angabe darüber beinhaltet, ob jede Netz-Slice, die der S-NSSAI in der zulässigen NSSAI entspricht, eine Obergrenze einer Quote erreicht; und
Übertragen, an das UE, einer Registrierungsantwortnachricht, die eine abgelehnte NSSAI, die die Obergrenze der Quote erreicht hat, und eine zulässige NSSAI beinhaltet, die mindestens eine S-NSSAI, die die Obergrenze der Quote nicht erreicht hat, oder die mindestens eine Standard-S-NSSAI enthält, basierend auf der Antwortnachricht,
wobei die erste Netzeinheit eine Einheit einer Zugriffs- und Mobilitätsverwaltungsfunktion, AMF, ist und die zweite Netzeinheit eine Funktion ist, die Netz-Slice-Zugriffssteuerung basierend auf der Quote unterstützt,
wobei mindestens eine Standard-S-NSSAI verwendet wird, wenn die jeweils angeforderte Netz-Slice die Obergrenze der Quote erreicht.

6. Erste Netzeinheit nach Anspruch 5, wobei eine Anzahl von UEs, die für die jeweilige Netz-Slice registriert sind, die der S-NSSAI entspricht, aktualisiert wird, wenn die Netz-Slice die Obergrenze nicht erreicht hat.

7. Erste Netzeinheit nach Anspruch 6, wobei die Anzahl von UEs, die für die jeweilige Netz-Slice registriert sind, die der S-NSSAI entspricht, erhöht wird, wenn die Netz-Slice die Obergrenze nicht erreicht hat, oder
wobei Statusinformationen von der zweiten Netzeinheit empfangen werden, wenn jede Netz-Slice, die der S-NSSAI entspricht, bereits die Obergrenze erreicht hat.

8. Erste Netzeinheit nach Anspruch 6, wobei die Anzahl von UEs, die für die jeweilige Netz-Slice registriert sind, die der S-NSSAI entspricht, verringert wird, wenn in der zweiten Netzeinheit gespeicherte Informationen das UE für die jeweilige Netz-Slice, die der S-NSSAI entspricht, nicht enthalten.

## Revendications

1. Procédé exécuté par une première entité de réseau dans un système de communication sans fil, le procédé comprenant,
recevoir, de la part d'un équipement utilisateur, UE, une demande d'enregistrement comprenant au moins une information d'assistance à la sélection de tranche de réseau unique, S-NSSAI, correspondant à chaque tranche de réseau demandée ;
identifier des informations d'abonnement comprenant au moins une S-NSSAI par défaut ;
déterminer si l'au moins une S-NSSAI est autorisée pour l'UE ;
transmettre, à une seconde entité de réseau, un message de demande, le message de demande comprenant un identifiant, ID, de l'UE et une NSSAI autorisée comprenant au moins une S-NSSAI autorisée pour l'UE sur la base du résultat de la détermination ;
recevoir, de la seconde entité de réseau, un message de réponse comprenant une indication selon laquelle chaque tranche de réseau correspondant à la S-NSSAI dans la NSSAI autorisée atteint une limite supérieure d'un quota ; et
transmettre, à l'UE, un message de réponse d'enregistrement comprenant une NSSAI rejetée qui a atteint la limite supérieure du quota, et une NSSAI autorisée comprenant au moins une S-NSSAI qui n'a pas atteint la limite supérieure du quota ou au moins une S-NSSAI par défaut sur la base du message de réponse,
dans lequel la première entité de réseau est une entité de fonction de gestion d'accès et de mobilité, AMF, et la seconde entité de réseau est une fonction prenant en charge la commande d'accès aux tranches de réseau sur la base du quota,
dans lequel au moins une S-NSSAI par défaut est utilisée lorsque chaque tranche de réseau demandée atteint la limite supérieure du quota.

2. Procédé de la revendication 1, dans lequel un nombre d'UE enregistrés pour chaque tranche de réseau correspondant à la S-NSSAI est mis à jour lorsque la tranche de réseau n'a pas atteint la limite supérieure.

3. Procédé de la revendication 2, dans lequel le nombre d'UE enregistrés pour chaque tranche de réseau correspondant à la S-NSSAI est augmenté lorsque la tranche de réseau n'a pas atteint la limite supérieure, ou
dans lequel des informations d'état sont reçues de la seconde entité de réseau, lorsque chaque tranche de réseau correspondant à la S-NSSAI a déjà atteint la limite supérieure.

4. Procédé de la revendication 2,
dans lequel le nombre d'UE enregistrés pour chaque tranche de réseau correspondant à la S-NSSAI est réduit, lorsque des informations stockées dans la seconde entité de réseau n'incluent pas l'UE pour chaque tranche de réseau correspondant à la S-NSSAI.

5. Première entité de réseau dans un système de communication sans fil, la première entité de réseau comprenant ;
un émetteur-récepteur (910) ; et
au moins un processeur (930), connecté à l'émetteur-récepteur et configuré pour :
recevoir, de la part d'un équipement utilisateur, UE, une demande d'enregistrement comprenant au moins une information d'assistance à la sélection de tranche de réseau unique, S-NSSAI, correspondant à chaque tranche de réseau demandée ;
identifier des informations d'abonnement comprenant au moins une S-NSSAI par défaut ;
déterminer si l'au moins une S-NSSAI est autorisée pour l'UE ;
transmettre, à une seconde entité de réseau, un message de demande, le message de demande comprenant un identifiant, ID, de l'UE et une NSSAI autorisée comprenant au moins une S-NSSAI autorisée pour l'UE sur la base du résultat de la détermination ;
recevoir, de la seconde entité de réseau, un message de réponse comprenant une indication selon laquelle chaque tranche de réseau correspondant à la S-NSSAI dans la NSSAI autorisée atteint une limite supérieure d'un quota ; et
transmettre, à l'UE, un message de réponse d'enregistrement comprenant une NSSAI rejetée qui a atteint la limite supérieure du quota, et une NSSAI autorisée comprenant au moins une S-NSSAI qui n'a pas atteint la limite supérieure du quota ou au moins une S-NSSAI par défaut sur la base du message de réponse,
dans laquelle la première entité de réseau est une entité de fonction de gestion d'accès et de mobilité, AMF, et la seconde entité de réseau est une fonction prenant en charge la commande d'accès aux tranches de réseau sur la base du quota,
dans laquelle au moins une S-NSSAI par défaut est utilisée lorsque chaque tranche de réseau demandée atteint la limite supérieure du quota.

6. Première entité de réseau de la revendication 5, dans laquelle un nombre d'UE enregistrés pour chaque tranche de réseau correspondant à la S-NSSAI est mis à jour lorsque la tranche de réseau n'a pas atteint la limite supérieure.

7. Première entité de réseau de la revendication 6, dans laquelle le nombre d'UE enregistrés pour chaque tranche de réseau correspondant à la S-NSSAI est augmenté lorsque la tranche de réseau n'a pas atteint la limite supérieure, ou
dans laquelle des informations d'état sont reçues de la seconde entité de réseau, lorsque chaque tranche de réseau correspondant à la S-NSSAI a déjà atteint la limite supérieure.

8. Première entité de réseau de la revendication 6, dans laquelle le nombre d'UE enregistrés pour chaque tranche de réseau correspondant à la S-NSSAI est réduit, lorsque des informations stockées dans la seconde entité de réseau n'incluent pas l'UE pour chaque tranche de réseau correspondant à la S-NSSAI.
